# EUROPÄISCHE PATENTSCHRIFT

(11) **EP 2 428 788 B1**
(45) Veröffentlichungstag und Bekanntmachung des Hinweises auf die Patenterteilung: **07.05.2014**
(21) Anmeldenummer: 11006766.7
(22) Anmeldetag: 18.08.2011
(51) Int. Cl.: G01M 1/04, G01M 1/06

(54) **Vorrichtung zur Drehlagerung eines auszuwuchtenden Rotors**
Device for providing a rotating bearing for a rotor to be balanced
Dispositif de palier de pivotement d'un rotor devant être équilibré

(30) Priorität: 09.09.2010 DE 102010044849
(43) Veröffentlichungstag der Anmeldung: 14.03.2012
(73) Patentinhaber: Hofmann Maschinen- und Anlagenbau GmbH, 67550 Worms-Rheindürkheim (DE)
(72) Erfinder: Bork, Bernhard, 64579 Gernsheim (DE)
(74) Vertreter: Eisenführ Speiser

(56) Entgegenhaltungen:
- EP-A2- 1 936 347
- DE-A1- 10 103 305
- DE-A1-102005 023 086
- DE-A1-102005 053 786

## Beschreibung

Die Erfindung betrifft eine Vorrichtung zur Drehlagerung eines auszuwuchtenden Rotors nach dem Oberbegriff des Patentanspruches 1.

Eine derartige Vorrichtung ist aus EP 1 936 347 A2 bekannt. Die bekannte Drehlagerung, welche als Gelenkwellenlagerung in einer Auswuchtmaschine ausgebildet ist, umfasst eine Federabstützung eines schwingenden Oberteils. Dieses enthält eine drehbar gelagerte Spindel mit einem Spannfutter zum Einspannen eines Gelenkwellenendes und einen Motor für den Antrieb der Spindel. Die Federstäbe sind parallel zur Drehachse ausgerichtet und in zwei parallelen vertikalen Ebenen, die gleiche Abstände von der Drehachse der Spindel haben, in gleicher Anzahl angeordnet. In jeder Ebene sind jeweils wenigstens zwei im Abstand voneinander angeordnete Gruppen von Federstäben vorhanden. Die Steifigkeit der Federstäbe in axialer Richtung ist wenigstens 100-mal größer als ihre radiale Biegesteifigkeit. Hierdurch sollen in einem breiten resonanzfreien Drehzahlbereich überkritische Unwuchtmessungen am Rotor durchgeführt werden können.

Aus DE 101 03 305 A1 ist eine Wuchtmaschine bekannt, bei welcher ein Elektromotor direkt und gleichachsig über eine Magnetkupplung mit der Wuchtspindel verbunden ist. Der Elektromotor und die Wuchtspindel sind in einer Lagerhülse drehbar gelagert. Die Lagerhülse ist mit Hilfe einer elastischen Halterung, beispielsweise einem Stahlband, am Maschinengestell elastisch auslenkbar befestigt.

Aus EP 0 410 331 A2 ist es bekannt, den auszuwuchtenden Rotor direkt mit einem Motor anzutreiben und den Motor zwischen Blattfedern oder Stabfedern, welche den Motor und den Rotor schwingfähig abstützen, anzuordnen.

Aufgabe der Erfindung ist es, eine Vorrichtung zur Drehlagerung eines auszuwuchtenden Rotors der eingangsgenannten Art zu schaffen, welche einen kompakten Aufbau besitzt und Unwuchtmessungen in einem breiten resonanzfreien Drehzahlbereich ermöglicht.

Diese Aufgabe wird durch die Merkmale des Patentanspruches 1 gelöst, wobei die Unteransprüche vorteilhafte Weiterbildungen der Erfindung beinhalten.

Bei der Erfindung wird eine drehbar gelagerte Wuchtspindel, mit welcher der auszuwuchtende Rotor drehfest zu verbinden ist, über mehrere parallel zur Spindelachse ausgerichtete Federstäbe an wenigstens einem Lagerbock schwingfähig gelagert. Die Wuchtspindel wird von einer Antriebseinrichtung, insbesondere einem Elektromotor, bei der Unwuchtmessung angetrieben. Die Federstäbe sind in mehr als zwei gegenüber der Spindelachse unterschiedliche Abstände aufweisenden Ebenen oder in um die Spindelachse unterschiedliche Drehwinkellagen aufweisenden Ebenen angeordnet. Die gegenüber der Spindelachse unterschiedliche Abstände aufweisenden Ebenen sind vorzugsweise parallel zueinander angeordnet und können zueinander gleiche Abstände aufweisen. Vorzugsweise schneiden sich die mehreren Ebenen in rechten Winkeln.

Bei der Anordnung der Federstäbe in den um die Spindelachse unterschiedliche Drehwinkellagen aufweisenden Ebenen besitzen diese Ebenen vorzugsweise gleiche Winkelabstände voneinander.

Die Federstäbe können auf unterschiedlichen Kreisumfängen um die Spindelachse angeordnet sein, wobei die Kreisumfänge vorzugsweise gleiche radiale Abstände voneinander aufweisen. Es ist auch möglich alle Federstäbe auf einem einzelnen Kreisumfang, vorzugsweise mit gleichen Drehwinkelabständen voneinander, anzuordnen.

Vorzugsweise besitzen die Federstäbe kreisrunde Querschnitte. Es sind jedoch auch von der Kreisform abweichende Querschnitte, insbesondere rechteckige, quadratische oder auch kreissektorförmige Querschnitte für die Federstäbe möglich.

Durch die Federstäbe wird eine weitgehend isotrope (quasi-isotrope) Lagerung der Wuchtspindel am Lagerbock erreicht. In bevorzugter Weise ist die über die Federstäbe am Lagerbock gelagerte Wuchtspindel in einer zur Spindelachse senkrechten Ebene als Ein-Ebene-Massenschwinger schwingfähig ausgeführt. Die Unwuchtmessungen erfolgen vorzugsweise im überkritischen Bereich der schwingfähigen Lagerung. Hierzu können die einen Enden der Federstäbe starr mit dem Lagerbock verbunden sein und die anderen Enden der Federstäbe mit einem die Wuchtspindel lagernden starren schwingfähigen Rahmen zur Bildung des Ein-Ebene-Massenschwingers verbunden sein. Die Verbindung der Federstabenden mit dem Lagerbock und dem starren schwingfähigen Rahmen erfolgt vorzugsweise durch Verschraubungen. Es ist jedoch auch möglich, die Federenden einstückig durch Verschweißen oder auf andere Weise mit dem Lagerbock oder dem starren Rahmen, der die Drehlagerung der Wuchtspindel aufnimmt, zu verbinden.

In bevorzugter Weise ist zwischen dem die Wuchtspindel drehbar lagernden und schwingfähigen Rahmen und dem Lagerbock eine die Resonanz des schwingenden Systems ändernde Einrichtung, insbesondere Schwingungsdämpfungseinrichtung, vorgesehen. Hierdurch erreicht man beim Durchfahren der Drehzahl des auszuwuchtenden Rotors durch den Resonanzbereich des schwingenden Systems, z.B. beim Erhöhen der Drehzahl in den überkritischen Drehzahlmessbereich, in welchem die Unwuchtmessung stattfindet, eine Dämpfung bzw. Reduzierung der Schwingungsamplituden des schwingenden Systems.

Ferner ist in bevorzugter Weise zwischen dem Lagerbock und der Wuchtspindel eine Drehmomentstütze vorgesehen, welche um die Spindelachse drehsteif und zumindest in Messrichtung nachgiebig ausgebildet ist. Die Messrichtung ist dabei senkrecht zur Spindelachse ausgerichtet.

Der elektrische Antrieb für die Wuchtspindel ist vorzugsweise so ausgebildet, dass die Wuchtspindel koaxial zum Rotor des Elektromotors angeordnet ist und insbesondere drehfest mit dem Rotor des Elektromotors verbunden ist. Hierzu kann die Wuchtspindel in einer axialen Ausnehmung oder in einem axialen durchgehenden Hohlraum des Rotors des Elektromotors drehfest mit dem Rotor verbunden sein. Zwischen dem Gehäuse der elektrischen Antriebseinrichtung, insbesondere des Elektromotors und einer an der Wuchtspindel vorgesehenen Spanneinrichtung für den Rotor kann eine elektrische Isolierung vorgesehen sein.

Zur Unwuchtmessung von länglichen Rotoren, insbesondere Gelenkwellen, wird vorzugsweise jedes Ende des länglichen Rotors in einer Drehlagerung gelagert. Um die Vorrichtung an unterschiedliche Längen des Rotors anzupassen kann der jeweilige Lagerbock der Drehlagerung axial zur Spindelachse verstellbar sein. Ferner kann in bevorzugter Weise für den länglichen Rotor eine weitere Drehlagerung mit der gleichen Federstabanordnung wie bei der Drehlagerung am Rotorende vorgesehen sein, welche eine Mittenlagerung zwischen den beiden Drehlagerungen an den Rotorenden bildet. Diese Mittenlagerung besitzt jedoch keine Antriebseinrichtung.

Bei der Erfindung kann das Verhältnis von Axial- zu Radialsteifigkeit der Wuchtspindellagerung Werte über 1000 erreichen.

Anhand der Figuren werden Ausführungsbeispiele der Erfindung erläutert. Es zeigt:
- Figur 1: ein erstes Ausführungsbeispiel;
- Figur 2: ein zweites Ausführungsbeispiel;
- Figur 3: eine Antriebseinrichtung, welche bei den Ausführungsbeispielen der Figuren 1 und 2 zum Einsatz kommen kann;
- Figur 4: eine Anordnung von Federstäben, welche beim Ausführungsbeispiel der Figur 2 zum Einsatz kommen kann;
- Figur 5: eine weitere Anordnung von Federstäben, welche beim Ausführungsbeispiel der Figur 2 zum Einsatz kommen kann;
- Figur 6: eine Anordnung von Federstäben bezüglich der Spindelachse der Wuchtspindel, wie sie beim Ausführungsbeispiel der Figur 2 zum Einsatz kommen kann;
- Figur 7: eine Anordnung von Federstäben, wie sie beim Ausführungsbeispiel der Figur 1 zum Einsatz kommen kann;
- Figur 8: eine weitere Anordnung von Federstäben, wie sie beim Ausführungsbeispiel der Figur 1 zum Einsatz kommen kann;
- Figur 9: ein Ausführungsbeispiel für einen Federkorb, bei dem die Federstäbe, wie in Figur 8 gezeigt, angeordnet sind, wobei dieser Federkorb beim Ausführungsbeispiel der Figur 1 zum Einsatz kommen kann;
- Figur 10: ein weiteres Ausführungsbeispiel der Erfindung, bei dem der in Figur 9 dargestellte Federkorb zum Einsatz kommt und welches eine Einrichtung zur Änderung der Resonanz des schwingenden Systems und eine Drehmomentstütze für die Wuchtspindel aufweist;
- Figur 11: ein Ausführungsbeispiel für eine Drehmomentstütze, wie sie beim Ausführungsbeispiel der Figur 10 zum Einsatz kommen kann;
- Figur 12: ein weiteres Ausführungsbeispiel der Erfindung mit einer Federstabanordnung, wie beim Ausführungsbeispiel der Figur 2 und mit einer Drehmomentstütze für die Wuchtspindel;
- Figur 13: ein Ausführungsbeispiel für eine Einrichtung zur Beeinflussung des Schwingungsverhaltens des schwingenden Systems im Ruhezustand, welches bei den Ausführungsbeispielen der Drehlagerungen der Figuren 2 und 10 zum Einsatz kommen kann;
- Figur 14: die in Figur 13 dargestellte Einrichtung in zur Schwingungsdämpfung betätigtem Zustand;
- Figur 15: ein Ausführungsbeispiel einer Mittenlagerung mit einer Drehlagerung für einen länglich ausgebildeten auszuwuchtenden Rotor, insbesondere Gelenkwelle;
- Figur 16: eine teilweise schnittbildliche Darstellung der in Figur 15 dargestellten Mittenlagerung mit einer Einrichtung zur Beeinflussung des Schwingungsverhaltens des schwingenden Systems; und
- Figur 17: eine vergrößerte Darstellung der bei der Mittenlagerung gemäß den Figuren 15 und 16 zum Einsatz kommenden Einrichtung zur Beeinflussung des Schwingungsverhaltens des schwingenden Systems.

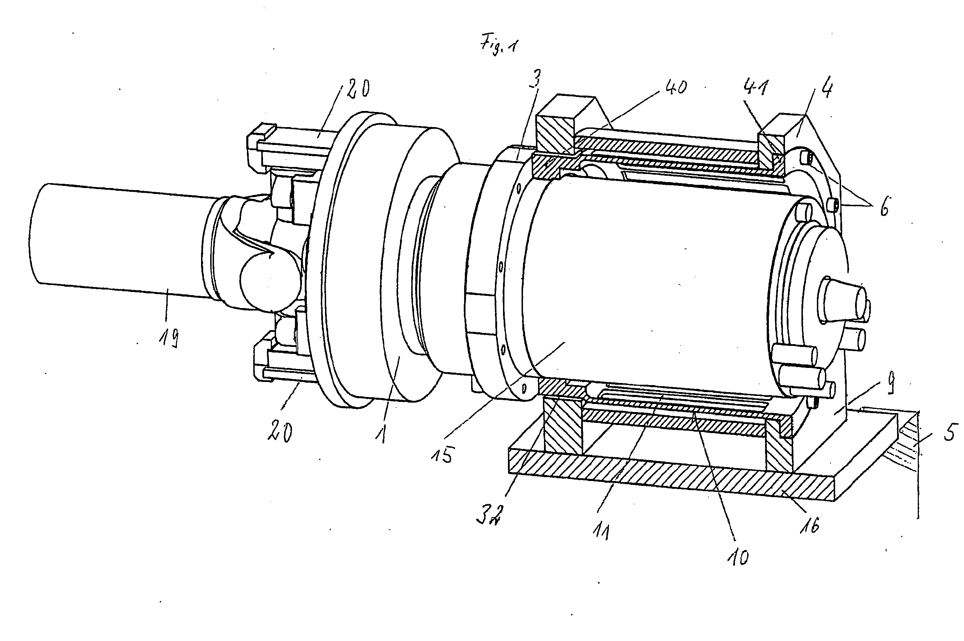

Die in den Figuren 1, 2, 10 und 12 dargestellten Ausführungsbeispiele dienen zur Drehlagerung eines auszuwuchtenden Rotors 19, welcher als länglicher Rotor, insbesondere Gelenkwelle ausgebildet sein kann. Die dargestellten Vorrichtungen besitzen eine drehbar gelagerte Wuchtspindel 1, mit welcher der auszuwuchtende Rotor 19 mit Hilfe einer Spanneinrichtung 20 drehfest beim Messlauf zu verbinden ist. Die Wuchtspindel 1 wird mittels mehrerer parallel zur Spindelachse 2 ausgerichteter Federstäbe 11 schwingfähig an einem Lagerbock 9 gelagert. Eine Antriebseinrichtung 13, welche als elektrische Antriebseinrichtung, insbesondere Elektromotor ausgebildet ist, dient zum Antrieb der Wuchtspindel 1. In den Figuren 1, 2, 10 und 12 ist bei den dargestellten Vorrichtungen die Spindelachse 2 der Wuchtspindel 1 horizontal ausgerichtet. Es ist jedoch auch möglich, die Wuchtspindel 1 mit vertikaler Spindelachse 2 oder in einer Winkellage zwischen vertikaler und horizontaler Anordnung am Lagerbock 9 abzustützen. Anstelle von länglichen Rotoren können auch andere Rotoren, beispielsweise Kraftfahrzeugräder, Turbinen und dergleichen ausgewuchtet werden.

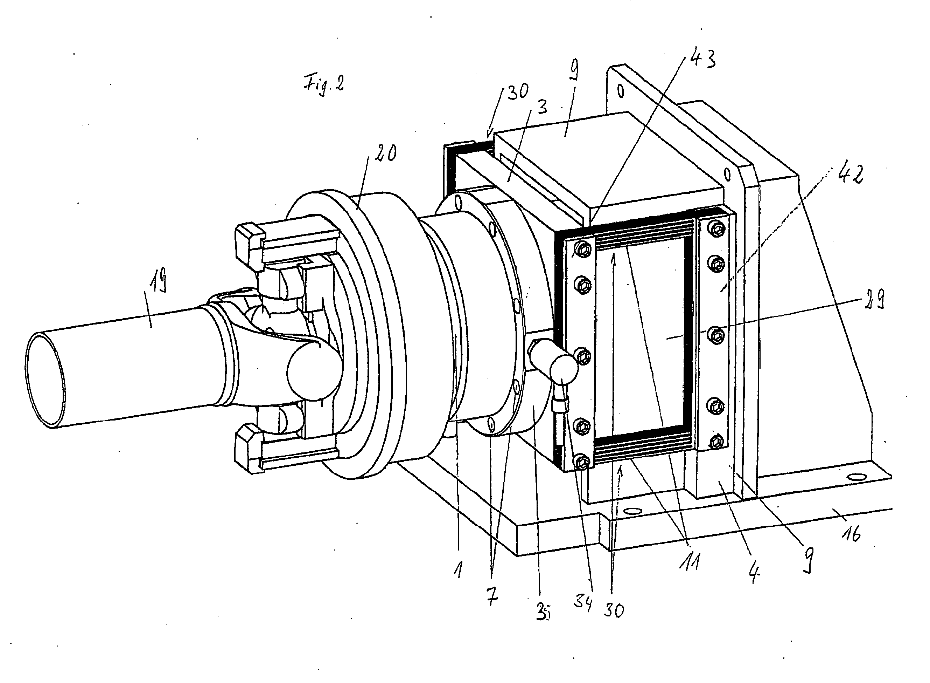

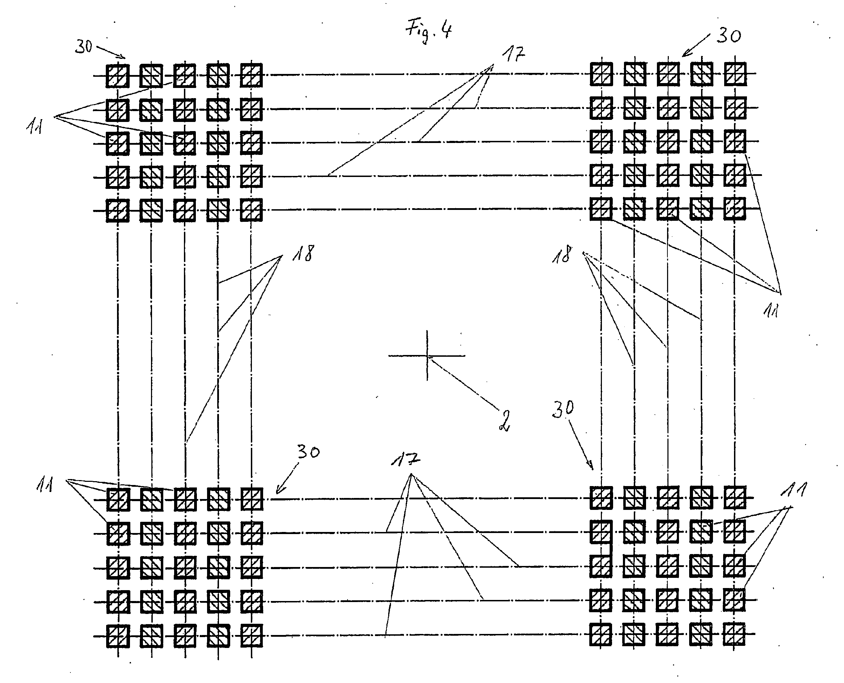

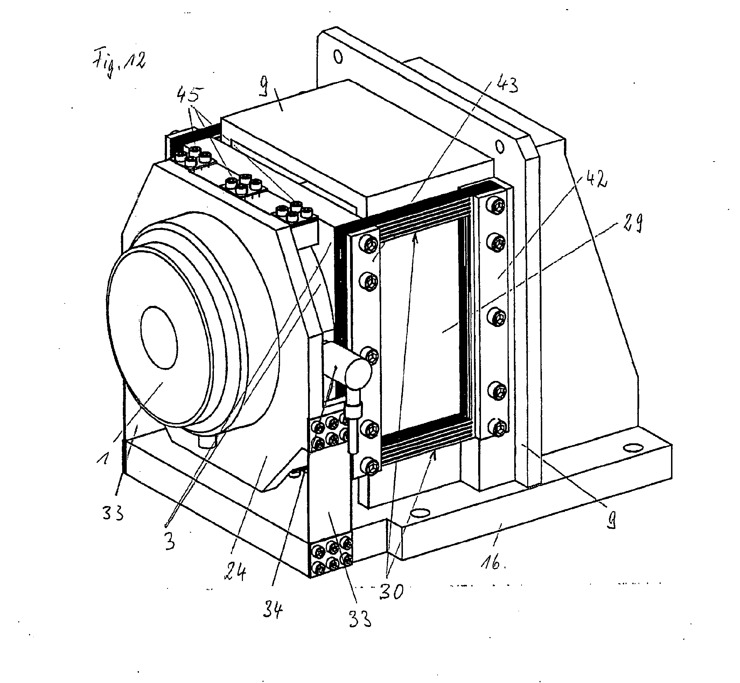

In den Figuren 4 bis 9 sind bevorzugte Anordnungen für die Federstäbe 11 gezeigt, mit denen die Wuchtspindel 1 am Lagerbock 9 abgestützt werden kann. Die in den Figuren 4, 5 und 6 gezeigten Federstabanordnungen können bei den Ausführungsbeispielen der Figuren 2 und 12 zum Einsatz kommen. Diese Federstabanordnungen bestehen aus vier Federstabgruppen 30. Jede Federstabgruppe 30 beinhaltet im Rechteck oder Quadrat angeordnete Federstäbe 11. Die jeweiligen Federstäbe 11 sind gleichmäßig im Quadrat bzw. Rechteck des Querschnitts jeder Federstabgruppe 30 angeordnet. Die Federstäbe 11 jeder Federstabgruppe 30 erstrecken sich in Ebenen 17 und 18, welche parallel zur Spindelachse 2 verlaufen. Die Ebenen 17 und 18 schneiden sich in rechten Winkeln. Die jeweiligen Ebenen 17 und 18 besitzen gleiche Abstände voneinander. Somit haben auch die Federstäbe 11 in jeder Federstabgruppe 30 gleiche Abstände voneinander innerhalb der Ebenen 17 und 18. Wie aus den Figuren 4 bis 6 zu ersehen ist, sind die Federstabgruppen 30 in den vier Ecken eines Rechtecks oder Quadrats angeordnet, dessen Diagonalen sich in der Spindelachse 2 schneiden. Die vier Federstabgruppen 30 enthalten jeweils die gleiche Anzahl an Federstäben 11. Es können auch mehr als vier Federstabgruppen vorgesehen sein.

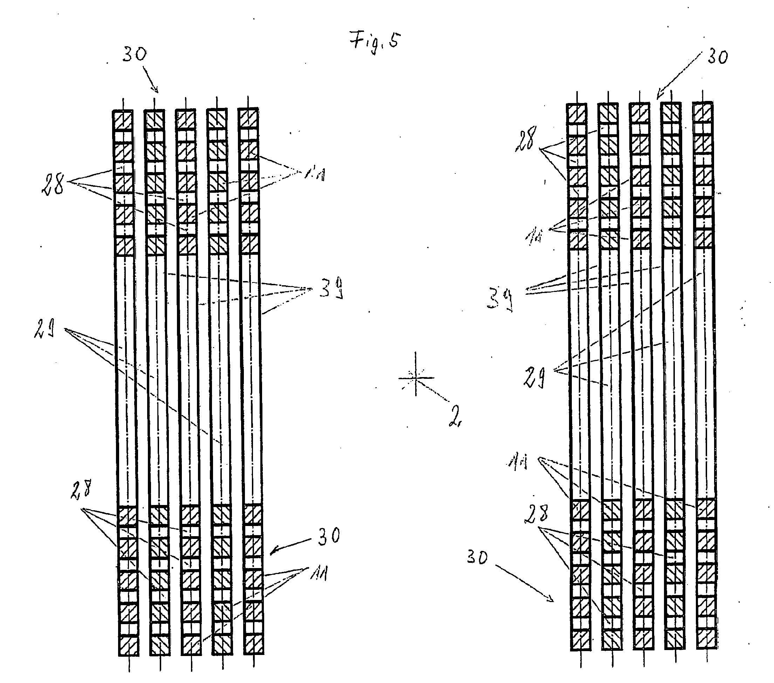

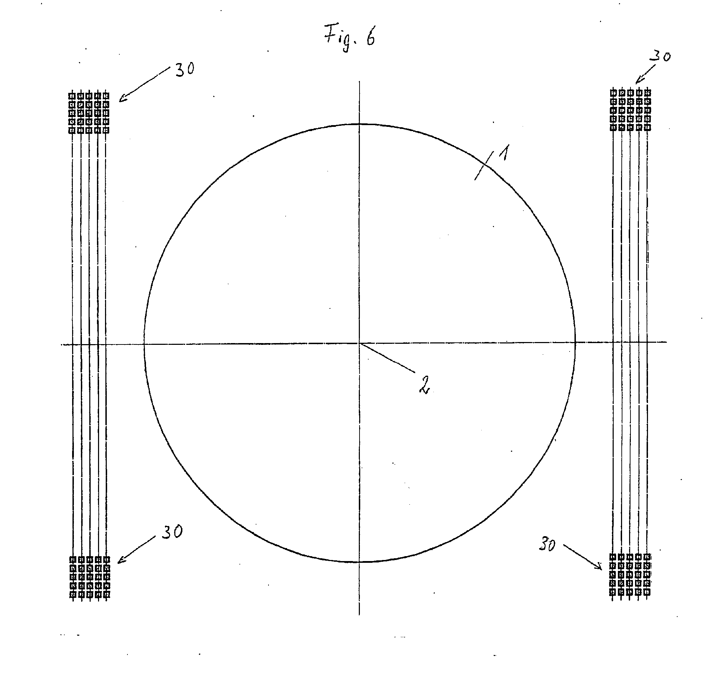

Bei den Ausführungsbeispielen der Figuren 4 und 6 sind die Federstäbe 11 als einzelne Federstäbe mit quadratischem Querschnitt ausgebildet. Anstelle des quadratischen Querschnitts können die Federstäbe auch kreisrunde Querschnitte oder elliptische, kreissektorenförmige oder andere geeignete Querschnittsformen aufweisen. Bei dem in Figur 5 dargestellten Ausführungsbeispiel sind die Federstäbe 11 aus geschlitzten Blechen 39, die parallel und mit Abstand zueinander angeordnet sind, gebildet. Zwischen den einzelnen Federstäben sind Schlitze 28 in den Blechen 39 zur Bildung der Federstäbe mit den in den Figuren 4 und 6 dargestellten Anordnungen der Federstabgruppen 30 vorgesehen. Zu beiden Seiten der Spindelachse sind die Bleche 39 parallel zueinander angeordnet, wobei in jeder Blechgruppe Ausnehmungen 29 vorgesehen sind. An jeder Blechgruppe werden zwei Federstabgruppen 30 gebildet. Die dabei erzielte Anordnung der Federstäbe 11 bezüglich der Spindelachse 2 ist die gleiche wie in den Figuren 4 und 6.

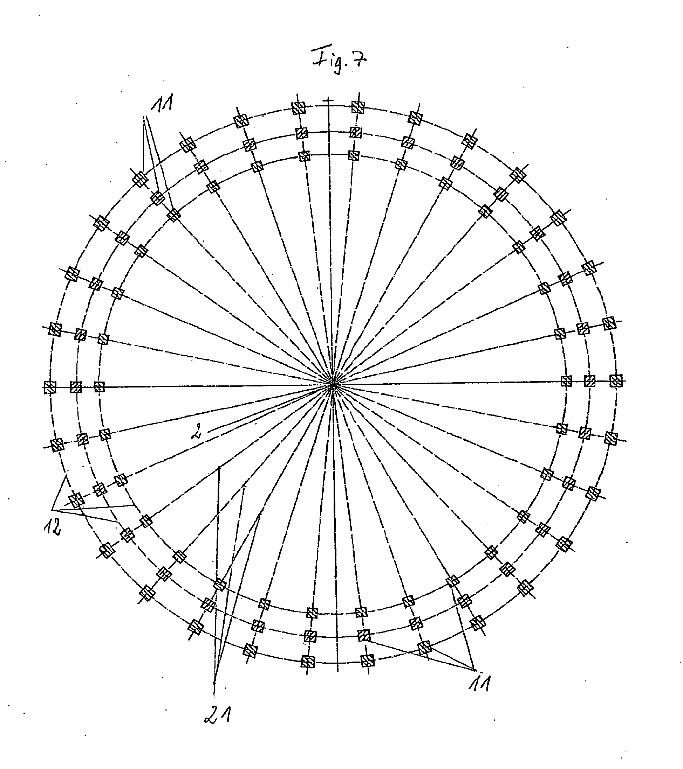

Bei den in den Figuren 7, 8 und 9 gezeigten Federstabanordnungen sind die Federstäbe 11 in Ebenen 21 angeordnet, welche um die Spindelachse 2 unterschiedliche Drehwinkellagen aufweisen. Beim Ausführungsbeispiel der Figur 7 sind die Federstäbe 11 in den Ebenen 21 auf unterschiedlichen Kreisumfängen 12 um die Spindelachse 2 angeordnet. Die Kreisumfänge 12 besitzen voneinander vorzugsweise gleiche radiale Abstände. Sie können jedoch auch unterschiedlich bemessene radiale Abstände voneinander aufweisen.

Für den Fall, dass bei den in den Figuren 4, 5 und 6 gezeigten Federstabanordnungen die Federstabgruppen 30 in Ecken eines Quadrats angeordnet sind, befinden sich die Federstäbe 11 in den vier Federstabgruppen 30 ebenfalls auch Kreisumfängen um die Spindelachse 2.

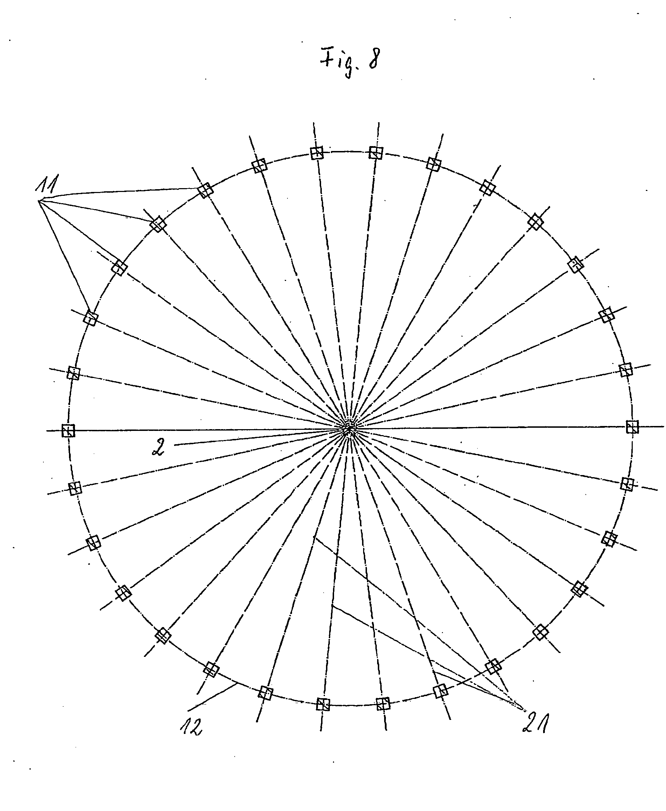

Bei dem in Figur 8 dargestellten Ausführungsbeispiel befinden sich alle Federstäbe 11 auf einem einzigen Kreisumfang 12 und liegen in Ebenen, die unterschiedliche Drehwinkellagen um die Spindelachse 2 aufweisen. Die unterschiedlichen Drehwinkellagen aufweisenden Ebenen 21 in den Ausführungsbeispielen der Figuren 7 und 8 besitzen vorzugsweise gleiche Drehwinkelabstände voneinander.

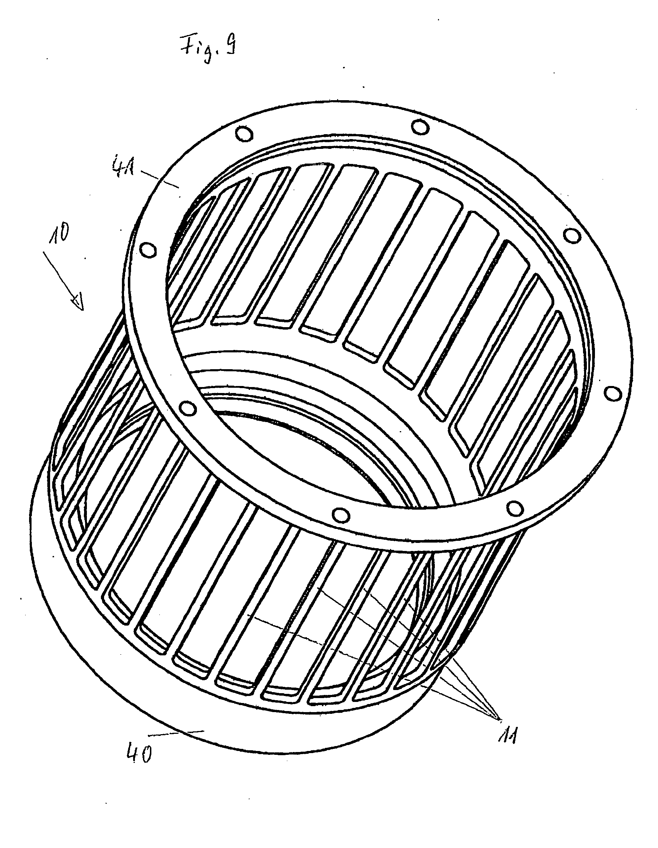

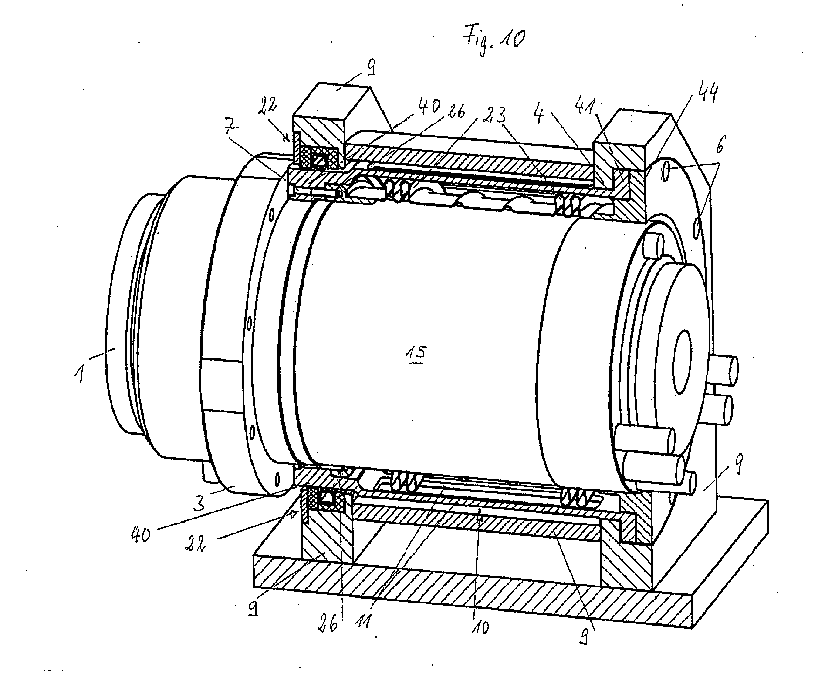

In der Figur 9 ist ein Ausführungsbeispiel für ein Konstruktionsteil gezeigt, welches eine Anordnung der Stabfedern 11 gemäß der Figur 8 aufweist. Dieses Konstruktionsteil bildet einen Federkorb 10, bei dem die Federstäbe 11 an ihren Enden mit ringförmigen Rahmen 40 und 41 miteinander verbunden sind. Ein derartiger Federkorb 10 kommt bevorzugt bei den Ausführungsbeispielen der Figuren 1 und 10 zur Anwendung. Ein Federkorb mit einer in der Figur 7 gezeigten Federstabanordnung, bei der die Federstäbe auf unterschiedlichen Kreisradien in den Ebenen 21 angeordnet sind, kann bei den dargestellten Ausführungsbeispielen ebenfalls zum Einsatz kommen.

Bei den in den Figuren 1, 2, 10 und 12 dargestellten Ausführungsbeispielen sind die einen Enden der Federstäbe 11 starr mit dem ortsfesten Lagerbock 9 verbunden. Die anderen Enden der Federstäbe 11 sind mit einem die Wuchtspindel 1 drehbar lagernden starren Rahmen 3 verbunden. Dadurch wird erreicht, dass der Rahmen 3 gegenüber dem Lagerbock 9 schwingend gelagert ist. Hierdurch wird ein schwingendes System geschaffen, welches in einer zur Spindelachse 2 senkrechten Ebene als Ein-Ebene-Massenschwinger ausgebildet ist. Hierfür ist im Bereich der freischwingenden Federstabenden, beispielweise dem ringförmigen Rahmen 40, welcher mit dem starren Rahmen 3 beispielsweise durch Schraubenverbindungen 7 verbunden ist, ein Freiraum 32 (Figur 1) geschaffen. Ein derartiger Freiraum ist auch beim Ausführungsbeispiel der Figur 2 zwischen den benachbarten Teilen des Lagerbockes 9 und des schwingfähigen Rahmens 3 vorhanden. Die beim Unwuchtmesslauf am schwingenden System erzeugten Schwingungen des Rahmens 3 gegenüber dem Lagerbock 9 werden von einem oder mehreren Messgebern 34 erfasst.

Zur starren Befestigung der nach Art des Federkorbes 10 angeordneten Federstäbe 11 mit dem Lagerbock 9 wird der ringförmige Rahmen 41 mittels Schraubenverbindungen 6 am Lagerbock 9 befestigt (Figur 1). Der Ring 40 am anderen Ende der Federstäbe 11 wird ebenfalls durch Schraubenverbindungen 7 mit dem Rahmen 3 fest verbunden.

Bei den Ausführungsbeispielen der Figuren 2 und 12 werden die Federstäbe bevorzugt von den geschlitzten Blechen gemäß Figur 5 gebildet. Die ungeschlitzten Blechteile an den Enden der Federstäbe 11 werden mithilfe von Schraubenverbindungen und Klemmplatten 42 und 43 am Lagerbock 9 und schwingfähigen Rahmen 3 befestigt. Am Lagerbock 9 können bei den Ausführungsbeispielen der Figuren 1, 2, 10 und 12 entsprechend geformte starre Rahmenteile 4 vorgesehen sein. Anstelle der Schraubenverbindungen können auch andere Verbindungsarten, welche beispielsweise durch Schweißen hergestellt sind, verwendet werden.

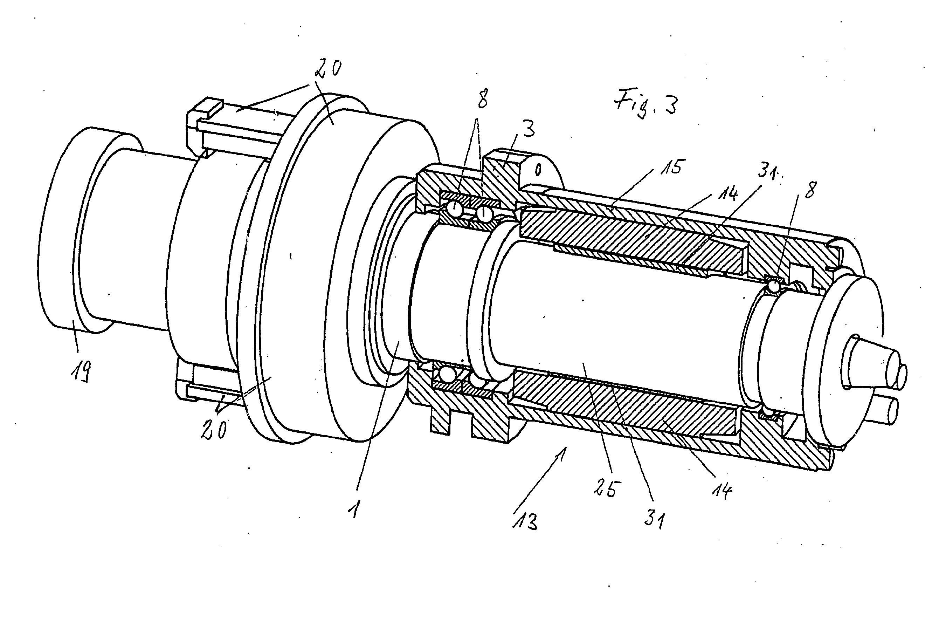

In Figur 3 ist ein Ausführungsbeispiel für die Drehlagerung der Wuchtspindel 1 am starren Rahmen 3 und dem damit insbesondere einstückig verbundenen Gehäuse 15 dargestellt. Ferner zeigt die Figur 3 ein Ausführungsbeispiel für die elektrische Antriebseinrichtung 13 der Wuchtspindel 1. Die im Bereich der Gehäuseenden vorgesehenen Wälzlager bilden eine Rotorlagerung 8 für die Wuchtspindel 1 im Gehäuse 15 und an dem aus einem Stück mit dem Gehäuse 15 bestehenden Rahmen 3. Bei dem dargestellten Direktantrieb weist die Wuchtspindel 1 eine Spindelwelle 25 auf, welche mit den Permanentmagneten 31 bei Verwendung eines Synchronmotor bzw. der Rotorwicklung im Falle eines Asynchronmotors des die elektrische Antriebseinrichtung 13 bildenden Elektromotors verbunden ist. Am Gehäuse 15 ist der Stator 14 des Elektromotors befestigt. Die Wuchtspindel 1 bildet somit eine Dreheinheit mit dem Rotor des Elektromotors der Antriebseinrichtung 13. Es ist jedoch auch möglich eine außerhalb des Rahmens 3 und außerhalb des Gehäuses 15 angeordnete elektrische Antriebseinrichtung vorzusehen, die über eine Antriebswelle mit der Wuchtspindel 1, welche drehbar im Rahmen 3 und dem Gehäuse 15 angeordnet ist, anzutreiben.

An ihrem aus dem Rahmen 3 beziehungsweise Gehäuse 15 herausragenden Ende besitzt die Wuchtspindel 1 die Spanneinrichtung 20, mit welcher der auszuwuchtende Rotor 19 drehfest und zentriert zur Spindelachse 2 mit der Wuchtspindel 1 verbunden werden kann. Bei der in Figur 3 dargestellten Anordnung ist die Wuchtspindel 1 koaxial zum Rotor 25 des Elektromotors angeordnet. Eine derartige koaxiale Anordnung wird auch dann vorgesehen, wenn die elektrische Antriebseinrichtung 13 außerhalb des Gehäuses 15 für den Antrieb der Wuchtspindel 1 angeordnet ist. Ferner kann beim dargestellten Ausführungsbeispiel der Figur 3 zwischen dem Gehäuse 15, der elektrischen Antriebseinrichtung 13 und der Spanneinrichtung 20 an der Wuchtspindel 1 eine nicht näher dargestellte elektrische Isolierung vorgesehen sein, welche zwischen der Wuchtspindel und dem Rotor 25, in welchen die Wuchtspindel 1 koaxial eingesteckt ist, sowie an der Rotorlagerung 8 vorgesehen sein kann.

Bei den dargestellten Ausführungsbeispielen der Figuren 1, 2, 10 und 12 befindet sich die Antriebseinrichtung 13 und die darin koaxial drehbar gelagerte Wuchtspindel 1 innerhalb der Anordnung der Federstäbe 11. Bei den Ausführungsbeispielen der Figuren 1 und 10 befindet sich die Antriebseinrichtung 13 und die Drehlagerung für die Wuchtspindel 1 innerhalb des Federkorbes 10. Hierdurch erreicht man eine kompakte Anordnung des schwingenden Systems und der Antriebseinrichtung für den auszuwuchtenden Rotor am Lagerbock 9.

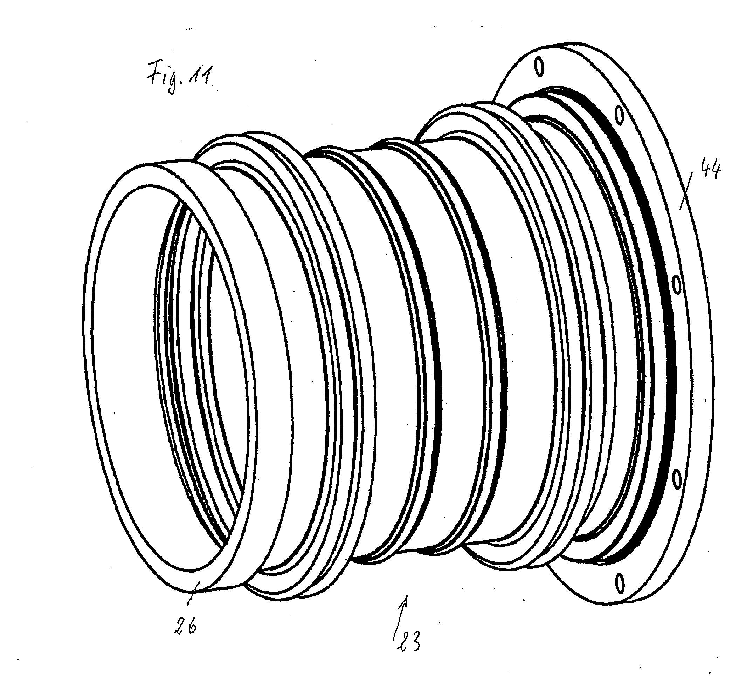

Durch die Anordnung der Federstäbe 11 in mehreren Ebenen wird eine quasi-isotrope Lagerung des schwingfähigen Systems am Lagerbock 9 gewährleistet. Zur Erhöhung der Drehsteifigkeit der Messanordnung um die Spindelachse können, wie in den Ausführungsbeispielen der Figuren 10 und 12 gezeigt ist, Drehmomentstützen vorgesehen sein. Beim Ausführungsbeispiel der Figur 10 wird eine Drehmomentstütze 23 durch eine in Figur 11 dargestellte drehsteife Manschette gebildet, welche innerhalb des Federkorbes 10 angeordnet ist. Die drehsteife Manschette der Drehmomentstütze 23 wird mit ihrem vorderem Manschettenende 26 zusammen mit dem ringförmigen Rahmen 40 des Federkorbes 10 am schwingfähigen Rahmen 3, vorzugsweise durch eine gemeinsame Schraubenverbindung 7 befestigt. Ein anderes ringförmiges Manschettenende 44 der drehsteifen Manschette der Drehmomentstütze 23 wird zusammen mit dem ringförmigen Rahmen 41 des Federkorbes 10 am Rahmenteil 4 des Lagerbockes 9, vorzugsweise mittels der Schraubenverbindungen 6 befestigt. Wie die Figur 10 zeigt, befindet sich die drehsteife Manschette der Drehmomentstütze 23 zwischen dem Federkorb 10 und dem Gehäuse 15 des schwingfähigen Systems, bestehend aus Wuchtspindel 1 und Antriebseinrichtung 13 (Figur 3). Die drehsteife Manschette der Drehmomentstütze 23 ist so ausgebildet, dass sie um die Spindelachse 2 drehsteif ist und zumindest in Messrichtung des Messgebers 34 nachgiebig ausgebildet ist. Die Manschette kann auch außerhalb des Federkorbes 10 liegen.

Bei dem in Figur 12 dargestellten Ausführungsbeispiel besteht die Drehmomentstütze aus einem starren Stützrahmen 24, welcher gegenüber dem Lagerbock 9 zu beiden Seiten der Spindel 1 mittels Blattfedern 33 abgestützt ist. Der starre Stützrahmen 24 ist beispielsweise mithilfe von Schraubenverbindungen 45 fest mit dem schwingfähigen Rahmen 3, an welchem die Wuchtspindel 1 über die Rotorlagerung 8 drehbar gelagert ist, befestigt. Durch diesen Stützrahmen 24 erfolgt eine drehsteife Abstützung der Wuchtspindel 1 am Lagerbock 9. Diese Drehmomentabstützung ist jedoch durch die Blattfedern 33 nachgiebig in Messrichtung des wenigstens einen Messgebers 34, welcher am Lagerbock 9 abgestützt ist.

Die in den Figuren 2 und 10 dargestellten Ausführungsbeispiele können ferner zwischen dem die Wuchtspindel 1 drehbar lagernden Rahmen 3 und dem Lagerbock 9 eine das Schwingungsverhalten, insbesondere die Resonanz des schwingenden Systems beeinflussende Einrichtung, welche beim dargestellten

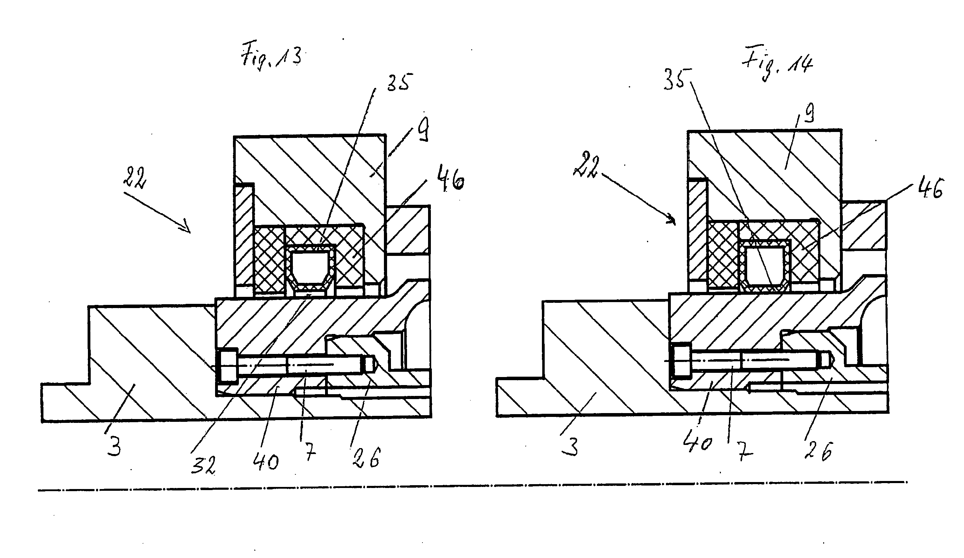

Ausführungsbeispiel als Schwingungsdämpfungseinrichtung 22 ausgebildet ist, aufweisen. Diese Schwingungsdämpfungseinrichtung 22 ist im Einzelnen in den Figuren 13 und 14 dargestellt. Die Schwingungsdämpfungseinrichtung 22 beinhaltet im Wesentlichen einen expandierbaren Ringschlauch 35, der in einer Ausnehmung, welche zum schwingfähigen Rahmen 3 hin offen ist, angeordnet ist. Im dargestellten Ausführungsbeispiel befindet sich zwischen dem schwingfähigen Rahmen 3 und dem gegenüberliegenden Teil des Lagerbockes 9 noch der ringförmige Rahmen 40 am Federkorb 10 und das ringförmige Manschettenende 26 der drehsteifen Manschette der Drehmomentstütze 23, welche mit der gemeinsamen Schraubenverbindung 7 am Rahmen 3 befestigt sind. Um während der Unwuchtmessung die Schwingungsfähigkeit des Rahmens 3 nicht zu beeinträchtigen, ist gegenüber dem Lagerbock 9 der Freiraum 32 vorhanden. Um beim Durchlauf der Drehzahl des auszuwuchtenden Rotors durch den Resonanzbereich des schwingungsfähigen Systems die Schwingungsamplituden zu begrenzen, wird, wie in Figur 14 dargestellt ist, das Innere des expandierbaren Ringschlauches 35 mit einem Druckmedium, welches pneumatischer oder hydraulischer Art sein kann, befüllt, sodass bei der Durchmessererweiterung des Ringschlauches 35 der Freiraum 32 von einem Teil des Ringschlauches 35 ausgefüllt wird. Hierdurch wird das Resonanzverhalten des schwingungsfähigen Systems beeinflusst, sodass ein sanfter Durchlauf durch den Resonanzbereich erreicht wird. Sobald sich beim Hochfahren die Drehzahl des auszuwuchtenden Rotors im überkritischen Bereich, d.h. im Messdrehzahlbereich befindet, wird das Druckmedium aus dem Inneren des Ringschlauches 35 entfernt bzw. der Druck soweit verringert, dass der Schlauch wieder seine ursprüngliche Form annimmt und für die Unwuchtmessung der Freiraum 32 (Figur 13) wieder vorhanden ist. Eine weitere Möglichkeit zur Beeinflussung der Dämpfung ist die Anordnung eines Dämpfungsringes 46 um den expandierenden Schlauch 35.

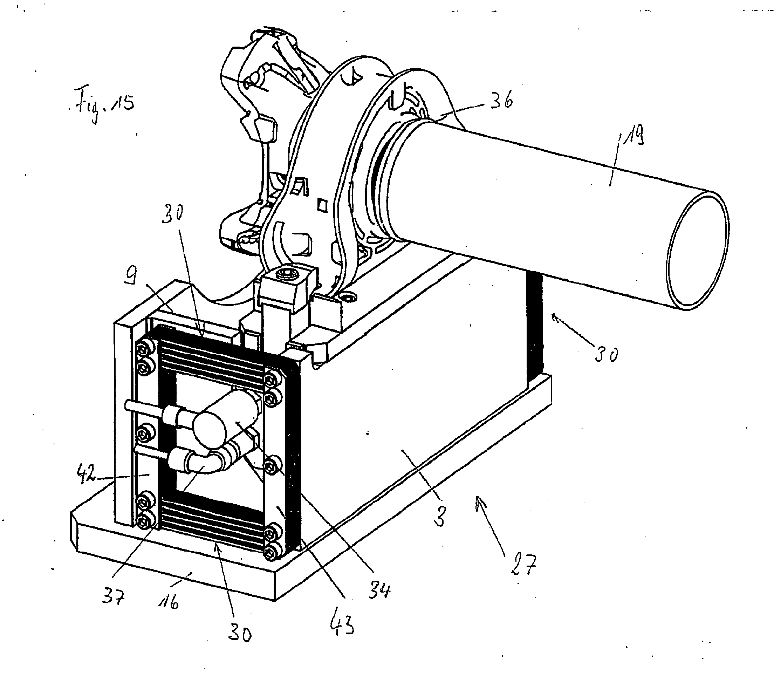

Bei den Ausführungsbeispielen der Figuren 2 und 12 können Schwingungsdämpfungseinrichtungen zum Einsatz kommen, wie sie bei dem in Figur 15 dargestellten Ausführungsbeispiel einer Mittenlagerung 27 des Rotors 19 zum Einsatz gebracht wird. Diese Mittenlagerung 27 beinhaltet ein Drehlager 36 in welchem der Rotor 19 drehbar gelagert ist. Das Drehlager 36 ist an dem schwingfähigen Rahmen 3 befestigt. Der Schwingrahmen 3 ist am Lagerbock 9 mittels der Stabfedern 11 abgestützt. Die Stabfedern 11 bestehen, wie in Figur 5 dargestellt ist, aus geschlitzten Blechen 39, die als Blechpakete an den Enden der Stabfedern 11 mittels Verschraubungen und Klemmplatten 42, 43 mit dem schwingfähigen Rahmen 3 und dem Lagerbock 9 fest verbunden sind. Die Stabfedern 11 erstrecken sich dabei parallel zur Drehachse des Rotors 19. Zum Einlegen des Rotors 19 kann das am Rotor 19 vorgesehene Drehlager auf den schwingfähigen Rahmen 3 aufgelegt und mit diesem in bekannter Weise mittels eines Spannsystems 36 starr verbunden werden. Der Antrieb des Rotors 19 beim Messlauf erfolgt an dem Ende, an welchem der Rotor 19 an der Wuchtspindel 1 befestigt ist. Schwingungen, welche aus einer Rotorunwucht resultieren, werden von dem Messgeber 34 erfasst.

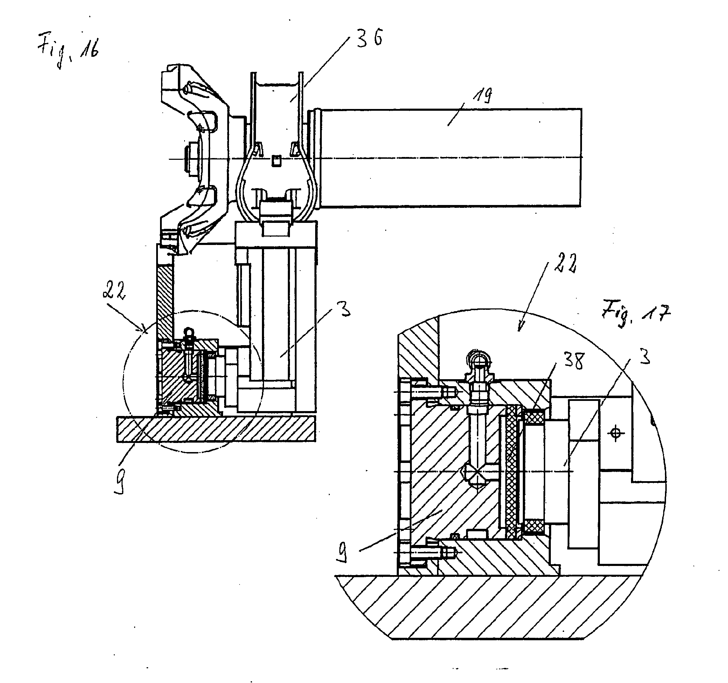

Wie aus den Figuren 16 und 17 zu ersehen ist, befindet sich zwischen dem Lagerbock 9 und dem schwingfähigem Rahmen 3 der Mittelagerung 27 eine Schwingungsdämpfungseinrichtung 22, welche die Schwingungsamplitude beim Durchlauf der Rotordrehzahl durch den Resonanzbereich des schwingungsfähigen Systems verringert. Diese Schwingungsdämpfungseinrichtung 22 besitzt ein Dämpfungselement 38, welches von außen über eine Druckmittelzuführleitung 37 mit einem Druckmedium pneumatisch oder hydraulisch an seiner einen Seite beaufschlagt werden kann. Hierbei wird das Dämpfungselement gegen den Rahmen 3 gedrückt, sodass dessen Schwingungsamplituden beim Durchlauf der Drehzahl des Rotors 19 durch den Resonanzbereich gedämpft und somit verringert werden. Zur Durchführung der Unwuchtmessung wird die Druckbeaufschlagung des Dämpfungselements 38 wieder abgeschaltet. Eine derartige Schwingungsdämpfungseinrichtung kann, wie schon erläutert, auch bei den Ausführungsbeispielen der Figuren 2 und 12 zwischen dem Lagerbock 9 und dem schwingfähigen Rahmen 3 vorgesehen sein.

Um die Messanordnung bei der Unwuchtmessung von länglichen Rotoren 19 insbesondere Gelenkwellen auf die jeweilige Länge des Rotors einstellen zu können, ist es von Vorteil den unteren Teil des Lagerbockes 9 als Schlitten 16 auszubilden, der in einem Maschinenbett 5, wie es in Figur 1 schematisch gezeigt ist, in Längsrichtung des Rotors 19 verschoben werden kann. Durch diese Verstellbarkeit des Lagerbockes 9 axial zur Spindelachse 2 lässt sich eine für die Unwuchtmessung geeignete drehfeste Verbindung des Rotors 19 mit der Wuchtspindel 1 erreichen. Auch die Mittenlagerung 27 (15) kann am Lagerbock 9 den Schlitten 16 aufweisen um eine axiale Verstellbarkeit der Mittenlagerung 27 zu ermöglichen.

### Bezugszeichenliste

- 1: Wuchtspindel
- 2: Spindelachse
- 3: schwingfähiger Rahmen
- 4: Rahmenteil am Lagerbock
- 5: Maschinenbett
- 6: Schraubenverbindungen
- 7: Schraubenverbindungen
- 8: Rotorlagerung
- 9: Lagerbock
- 10: Federkorb
- 11: Federstäbe
- 12: Kreisumfänge
- 13: Antriebseinrichtung
- 14: Stator
- 15: Gehäuse
- 16: Schlitten
- 17: Ebenen
- 18: Ebenen
- 19: auszuwuchtender Rotor
- 20: Spanneinrichtung
- 21: Ebenen
- 22: Schwingungsdämpfungseinrichtung
- 23: Drehmomentstütze
- 24: starrer Stützrahmen
- 25: Wuchtspindelwelle
- 26: Manschettenende
- 27: Mittenlagerung
- 28: Schlitze
- 29: Ausnehmungen
- 30: Stabgruppe
- 31: Magnet
- 32: Freiraum
- 33: Blattfeder
- 34: Messgeber
- 35: expandierbarer Ringschlauch
- 36: Spannsystem
- 37: Druckmittelzuführleitung
- 38: Dämpfungselement
- 39: Bleche
- 40: ringförmiger Rahmen
- 41: ringförmiger Rahmen
- 42: Klemmplatte
- 43: Klemmplatte
- 44: Manschettenende
- 45: Schraubenverbindungen
- 46: Dämpfungsring

## Patentansprüche

1. Vorrichtung zur Drehlagerung eines auszuwuchtenden Rotors (19) mit einer drehbar gelagerten Wuchtspindel (1), mit welcher der auszuwuchtende Rotor (19) drehfest zu verbinden ist, wenigstens einem Lagerbock (9), mehreren parallel zur Spindelachse (2) ausgerichteten Federstäben (11), welche zur schwingfähigen Lagerung der Wuchtspindel am Lagerbock (9) dienen, und einer elektrischen einen Rotor aufweisenden Antriebseinrichtung (13) für die Wuchtspindel (1), **dadurch gekennzeichnet, dass** alle Federstäbe (11) auf einem einzelnen Kreisumfang (12) oder mehreren Kreisumfängen liegen und die Wuchtspindel (1) koaxial zum Rotor der elektrischen Antriebseinrichtung (13) und zur Mitte der Anordnung der Federstäbe (11) angeordnet ist.

2. Vorrichtung nach Anspruch 1, **dadurch gekennzeichnet, dass** die Federstäbe (11) in um die Spindelachse (2) unterschiedliche Drehwinkellagen aufweisenden Ebenen (21), welche gleiche Winkelabstände voneinander aufweisen, angeordnet sind.

3. Vorrichtung nach Anspruch 1, **dadurch gekennzeichnet, dass** die Kreisumfänge gleiche radiale Abstände voneinander aufweisen.

4. Vorrichtung nach einem der Ansprüche 1 bis 3, **dadurch gekennzeichnet, dass** die Querschnitte der Federstäbe (11) von der Kreisform abweichende Querschnittsformen haben.

5. Vorrichtung nach einem der Ansprüche 1 bis 4, **dadurch gekennzeichnet, dass** die über die Federstäbe (11) am Lagerbock (9) gelagerte Wuchtspindel (1) in einer zur Spindelachse (2) senkrechten Ebene als Ein-Ebene-Massenschwinger ausgeführt ist.

6. Vorrichtung nach einem der Ansprüche 1 bis 5, **dadurch gekennzeichnet, dass** die einen Enden der Federstäbe (11) starr mit dem Lagerbock (9) verbunden sind und die anderen Enden der Federstäbe (11) mit einem die Wuchtspindel (1) lagernden starren Rahmen (3) zur Bildung des Ein-Ebene-Massenschwingers verbunden sind.

7. Vorrichtung nach Anspruch 5 oder 6, **dadurch gekennzeichnet, dass** zwischen dem die Wuchtspindel (1) lagernden Rahmen (3) und dem Lagerbock (9) eine das Schwingungsverhalten des Systems beeinflussende Einrichtung, vorhanden ist.

8. Vorrichtung nach Anspruch 7, **dadurch gekennzeichnet, dass** die das Schwingungsverhalten des Systems beeinflussende Einrichtung eine Schwingungsdämpfungseinrichtung (22) ist.

9. Vorrichtung nach einem der Ansprüche 1 bis 8, **dadurch gekennzeichnet, dass** zwischen dem Lagerbock (9) und der Wuchtspindel (1) eine Drehmomentstütze (23; 24, 33) vorhanden ist, welche um die Spindelachse (2) drehsteif und zumindest in Messrichtung nachgiebig ausgebildet ist.

10. Vorrichtung nach Anspruch 9, **dadurch gekennzeichnet, dass** die Drehmomentstütze (23) als Manschette ausgebildet ist.

11. Vorrichtung nach einem der Ansprüche 1 bis 10, **dadurch gekennzeichnet, dass** die Antriebseinrichtung (13) innerhalb der Anordnung der Federstäbe (11) angeordnet ist.

12. Vorrichtung nach einem der Ansprüche 1 bis 11, **dadurch gekennzeichnet, dass** die Wuchtspindel (1) drehfest mit dem Rotor der Antriebseinrichtung (13) verbunden ist.

13. Vorrichtung nach einem der Ansprüche 1 bis 12, **dadurch gekennzeichnet, dass** zwischen einer Baueinheit, bestehend aus einem Gehäuse (15) für die Wuchtspindel (1), der elektrischen Antriebseinrichtung (13) und dem die Wuchtspindel (1) lagernden starren Rahmen (3), und einer Spanneinrichtung (20) für den auszuwuchtenden Rotor (19) an der Wuchtspindel (1) eine elektrische Isolierung vorhanden ist.

14. Vorrichtung zur Unwuchtmessung an einem länglichen Rotor (19), wobei jedes Ende des länglichen Rotors (19) in einer Vorrichtung nach einem der Ansprüche 1 bis 13 gelagert ist.

15. Vorrichtung nach Anspruch 14, **dadurch gekennzeichnet, dass** für den länglichen Rotor (19) eine Mittenlagerung (27) mit einer Stabfederanordnung der Vorrichtung zur Drehlagerung gemäß Anspruch 1 ohne Antriebseinrichtung (13) vorhanden ist.

## Claims

1. Apparatus for rotatably mounting a rotor to be balanced (19), comprising a rotatably mounted balancing spindle (1) to which the rotor to be balanced (19) is to be non-rotatingly connected, at least one bearing block (9), a plurality of spring bars (11) aligned parallel to the spindle axis (2) and used to mount the balancing spindle on the bearing block (9) such that the balancing spindle is able to vibrate, and an electric drive mechanism (13) for the balancing spindle (1), said mechanism having a rotor, **characterised in that** all the spring bars (11) lie on a single circumference (12) or on a plurality of circumferences and that the balancing spindle (1) is arranged coaxially with the rotor of the electric drive mechanism (13) and with the middle of the arrangement of spring bars (11).

2. The apparatus according to claim 1, **characterised in that** the spring bars (11) are arranged in planes (21) which are at different rotary angular positions about the spindle axis (2) and which are spaced the same angular distance from each other.

3. The apparatus according to claim 1, **characterised in that** the circumferences are at equal radial distances from each other.

4. The apparatus according to claims 1 to 3, **characterised in that** the cross-sections of the spring bars (11) have cross-sectional shapes that deviate from the circular shape.

5. The apparatus according to any one of claims 1 to 4, **characterised in that** the spindle (1) mounted via the spring bars (11) on the bearing block (9) is embodied as a single-plane flywheel in a plane perpendicular to the spindle axis (2).

6. The apparatus according to any one of claims 1 to 5, **characterised in that** the one ends of the spring bars (11) are rigidly connected to the bearing block (9) and the other ends of the spring bars (11) are connected to a rigid frame (3) bearing the balancing spindle (1), in order to form the single-plane flywheel.

7. The apparatus according to claim 5 or 6, **characterised in that** a mechanism influencing the vibration characteristics of the system is provided between the bearing block (9) and the frame (3) bearing the balancing spindle (1).

8. The apparatus according to claim 7, **characterised in that** the mechanism influencing the vibration characteristics of the system is a vibration damping mechanism (22).

9. The apparatus according to any one of claims 1 to 8, **characterised in that** a torque support (23; 24, 33) which is torsionally resistant about the spindle axis (2) and flexible in at least the measuring direction is provided between the bearing block (9) and the balancing spindle (1).

10. The apparatus according to claim 9, **characterised in that** the torque support (23) is embodied as a collar.

11. The apparatus according to any one of claims 1 to 10, **characterised in that** the drive mechanism (13) is disposed inside the arrangement of spring bars (11).

12. The apparatus according to any one of claims 1 to 11, **characterised in that** the balancing spindle (1) is connected non-rotatingly to the rotor of the drive mechanism (13).

13. The apparatus according to any one of claims 1 to 12, **characterised in that** electric insulation is provided between an assembly, consisting of a housing (15) for the balancing spindle (1), the electric drive mechanism (13) and the rigid frame (3) bearing the balancing spindle (1), and a clamping device (20) on the balancing spindle (1) for the rotor to be balanced (19).

14. Apparatus for measuring the unbalance of an elongate rotor (19), wherein each end of the elongate rotor (19) is mounted in an apparatus according to any one of claims 1 to 13.

15. The apparatus according to claim 14, **characterised in that** a centre mounting (27) comprising an arrangement of spring bars of the apparatus for rotatably mounting according to claim 1 and without a drive mechanism (13) is provided for the elongate rotor (19).

## Revendications

1. Dispositif de montage à rotation d'un rotor (19) à équilibrer, comprenant une broche (1) d'équilibrage dont le rotor (19) à équilibrer doit être rendu solidaire en rotation, au moins un palier support (9), plusieurs barres (11) formant ressort dirigées parallèlement à l'axe (2) de la broche et servant au montage avec possibilité d'oscillation de la broche d'équilibrage sur le palier support (9) et un dispositif (13) électrique, à rotor d'entraînement, de la broche (1) d'équilibrage, **caractérisé en ce que** toutes les barres (11) formant ressort se trouvent sur un pourtour (12) circulaire unique ou sur plusieurs pourtours circulaires et la broche (1) d'équilibrage est montée co-axialement au rotor du dispositif (13) d'entraînement électrique et au milieu de l'agencement des barres (11) formant ressort.

2. Dispositif suivant la revendication 1, **caractérisé en ce que** les barres (11) formant ressort sont disposées dans des plans (21) ayant des positions angulaires de rotation différentes autour de l'axe (2) de la broche et ayant de mêmes intervalles angulaires entre eux.

3. Dispositif suivant la revendication 1, **caractérisé en ce que** les pourtours circulaires ont entre eux de mêmes intervalles radiaux.

4. Dispositif suivant l'une des revendications 1 à 3, **caractérisé en ce que** les sections transversales des barres (11) formant ressort ont des formes de section transversale qui s'écartent de la forme circulaire.

5. Dispositif suivant l'une des revendications 1 à 4, **caractérisé en ce que** la broche (1) d'équilibrage montée sur le palier support (9) par les barres (11) formant ressort est réalisée, sous la forme d'un oscillateur de masse à un seul plan, dans un plan perpendiculaire à l'axe (2) de la broche.

6. Dispositif suivant l'une des revendications 1 à 5, **caractérisé en ce que** les unes des extrémités des barres (11) formant ressort sont reliées rigidement au palier support (9) et les autres extrémités des barres (11) formant ressort sont, pour la formation de l'oscillateur de masse à un seul plan, reliées à un cadre (3) rigide portant la broche (1) d'équilibrage.

7. Dispositif suivant la revendication 5 ou 6, **caractérisé en ce qu'**il y a un dispositif, influençant les propriétés d'oscillation du système, entre le cadre (3) portant la broche (1) d'équilibrage et le palier support (9).

8. Dispositif suivant la revendication 7, **caractérisé en ce que** le dispositif influençant les propriétés d'oscillation du système est un dispositif (22) d'amortissement des oscillations.

9. Dispositif suivant l'une des revendications 1 à 8, **caractérisé en ce qu'**il y a, entre le palier support (9) et la broche (1) d'équilibrage, un appui (23, 24, 33) de couple de rotation, qui est rigide en torsion autour de l'axe (2) de la broche et qui cède au moins dans la direction de mesure.

10. Dispositif suivant la revendication 9, **caractérisé en ce que** l'appui (23) de couple de rotation est constitué sous la forme d'une manchette.

11. Dispositif suivant l'une des revendications 1 à 10, **caractérisé en ce que** dispositif (13) d'entraînement est monté à l'intérieur de l'agencement des barres (11) formant ressort.

12. Dispositif suivant l'une des revendications 1 à 11, **caractérisé en ce que** la broche (1) d'équilibrage est solidaire en rotation du rotor du dispositif (13) d'entraînement.

13. Dispositif suivant l'une des revendications 1 à 12, **caractérisé en ce qu'**une unité de construction constituée d'une enveloppe (15) pour la broche (1) d'équilibrage du dispositif (13) d'entraînement électrique et du cadre (3) rigide portant la broche (1) d'équilibrage et un dispositif (20) de blocage du rotor (19) à équilibrer sur la broche (1) d'équilibrage, il y a un isolant électrique.

14. Dispositif de mesure du balourd d'un rotor (19) oblong, chaque extrémité du rotor (19) oblong étant monté dans un dispositif suivant l'une des revendications 1 à 13.

15. Dispositif suivant la revendications 14, **caractérisé en ce qu'**il est prévu, pour le rotor (19) oblong, un palier (27) médian ayant un agencement à barres formant ressort pour le montage à rotation suivant la revendication 1 sans dispositif (13) d'entraînement.
